Europäisches Patentamt

European Patent Office

Office européen des brevets

(19)

(11) Veröffentlichungsnummer: **0 064 738**
**B1**

(12) **EUROPÄISCHE PATENTSCHRIFT**

(45) Veröffentlichungstag der Patentschrift:
02.05.85

(21) Anmeldenummer: **82103980.7**

(22) Anmeldetag: **07.05.82**

(51) Int. Cl.⁴: **H 01 M 10/39** // B60L11/18

(54) **Hochtemperaturbatterie.**

(30) Priorität: **12.05.81 DE 3118693**

(43) Veröffentlichungstag der Anmeldung:
**17.11.82 Patentblatt 82/46**

(45) Bekanntmachung des Hinweises auf die Patenterteilung:
**02.05.85 Patentblatt 85/18**

(84) Benannte Vertragsstaaten:
**BE FR GB IT NL**

(56) Entgegenhaltungen:
**DE - A - 2 610 222**
**DE - B - 2 442 042**

(73) Patentinhaber: **BROWN, BOVERI & CIE
Aktiengesellschaft, Kallstadter Strasse 1,
D-6800 Mannheim 31 (DE)**

(72) Erfinder: **Hasenauer, Dieter, Ing. (grad.),
Freudenbergstrasse 13, D-6940 Weinheim (DE)**

(74) Vertreter: **Kempe, Wolfgang, Dr. et al, c/o Brown, Boveri
& Cie AG Postfach 351, D-6800 Mannheim 1 (DE)**

## Beschreibung

Die Erfindung bezieht sich auf eine Hochtemperaturbatterie mit mindestens einer Speicherzelle, die von einer thermischen Isolierung umgeben und mittels einer Halterung im Innenraum der thermischen Isolierung befestigt ist.

Solche Hochtemperaturbatterien, die mit elektrochemischen Speicherzellen aufgebaut sind, werden in Zukunft in vermehrtem Masse für den Elektroantrieb von Fahrzeugen eingesetzt.

Die bis jetzt bekanntgewordenen Hochtemperaturbatterien sind aus einer Vielzahl von elektrochemischen Speicherzellen aufgebaut. Für den Elektroantrieb von Fahrzeugen werden Hochtemperaturbatterien mit etwa 500 Speicherzellen benötigt. Die Hochtemperaturbatterien arbeiten bei einer Temperatur von 350 bis 500°C. Um Wärmeverluste zu vermeiden, sind die Speicherzellen der Hochtemperaturbatterie von einer thermischen Isolierung umgeben. Andererseits muss jedoch auch für eine ausreichende Kühlung innerhalb dieser Hochtemperaturbatterien gesorgt werden, damit die Betriebstemperatur der Speicherzellen nicht überschritten und eine Beschädigung derselben verhindert wird.

In den bisher bekannten Hochtemperaturbatterien sind jeweils eine bestimmte Anzahl von Speicherzellen zusammengefasst und durch ein oder mehrere Metallbänder zusammengehalten. Die Entnahme einer einzelnen Speicherzelle hieraus ist nur durch Lösen des Gesamtverbandes möglich. Durch das enge Zusammenpacken der Speicherzellen in diesem Verband ist eine Kühlung jeder einzelnen Zelle nicht oder nur unvollständig möglich.

Der Erfindung liegt die Aufgabe zugrunde eine Hochtemperaturbatterie zu schaffen, bei der die Speicherzellen einzeln aus der Halterung gelöst und allseitig von Kühlluft umströmt werden können.

Gelöst wird diese Aufgabe bei einer Hochtemperaturbatterie der eingangs genannten Art dadurch, dass wenigstens eine lösbare Halterung vorgesehen ist, die für die freitragende Befestigung einer jeden Speicherzelle wenigstens zwei in definiertem Abstand senkrecht untereinander angeordnete Klemmelemente aufweist, dass jedes Klemmelement mit den angrenzenden in der gleichen Ebene angeordneten Klemmelementen verbunden ist, und dass die Klemmelemente wenigstens einer Ebene an mindestens einem Träger der Halterung befestigt sind.

Die Klemmelemente der Halterung sind vorzugsweise als Klemmringe ausgebildet. Jeder Klemmring ist mit einer Klemmöse versehen. Die Klemmringe sind vorzugsweise so angeordnet, dass ihre Klemmösen nach aussen weisen und für die Montage beziehungsweise Demontage der Speicherzellen leicht zugänglich sind. Die im Inneren der thermischen Isolierung zur Befestigung der Speicherzellen vorgesehene Halterung ist vorzugsweise für die Befestigung von zylinderförmigen Speicherzellen ausgebildet. Die Halterung ist ferner so gestaltet, dass die Speicherzellen aufrecht innerhalb der Hochtemperaturbatterie angeordnet werden. Für das Montieren beziehungsweise Demontieren der Speicherzellen werden die Durchmesser der Klemmringe durch das Öffnen der Klemmösen vergrössert, so dass die Speicherzellen auf einfache Weise zwischen die Klemmringe eingefügt beziehungsweise diesen entnommen werden können. Bei der erfindungsgemässen Hochtemperaturbatterie kann jede Speicherzelle einzeln herausgenommen beziehungsweise wieder eingesetzt werden. Bei einer Ausführungsform der Hochtemperaturbatterie weist die verwendete Halterung zwei Klemmringebenen auf. Jede Ebene wird durch zwei Reihen mit Klemmringen gebildet. Die Klemmringe einer jeden Ebene sind paarweise angeordnet und aneinandergereiht.

Bei einer anderen Ausführungsform der Erfindung sind die in einer Ebene angeordneten Klemmringe so positioniert, dass die erste Reihe von Klemmringen zu der zweiten Reihe von Klemmringen versetzt angeordnet ist. Die Klemmringe der zweiten Ebene sind in entsprechender Weise angeordnet.

Jede Speicherzelle wird in dem Bereich, in dem sie von den Klemmelementen umgeben wird von einer Isolierung umhüllt. Diese hat die Aufgabe, eine elektrisch leitende Verbindung zwischen dem Metallgehäuse und den metallenen Klemmelementen zu verhindern.

Wie bereits oben erwähnt, werden die beiden Klemmringreihen einer jeden Ebene an beiden Enden mit einem Träger verbunden. Vorzugsweise werden hierfür zwei Endplatten benutzt die senkrecht zu den beiden Klemmringebenen angeordnet sind. Die beiden Klemmringreihen einer jeden Ebene sind an ihren beiden Enden mit je einem Stegblech kraftschlüssig verbunden. Über diese sind sie an der Endplatte befestigt. Die Stegbleche sind jeweils mit den beiden Klemmringen einer Ebene verschweisst. Die Befestigung der Stegbleche an den Endplatten kann vorzugsweise durch eine Schraubverbindung oder eine Schweissverbindung erfolgen.

Es besteht auch die Möglichkeit, die beiden Klemmringreihen einer jeden Ebene direkt an den beiden die Klemmringebenen begrenzenden Batteriewänden zu befestigen. Vorzugsweise geschieht dies wiederum über Stegbleche die an der Batteriewand festgeschraubt werden, so dass die beiden Klemmringebenen jederzeit gelöst werden können. Dadurch wird ebenfalls sichergestellt, dass die gesamten Zellen jederzeit der Batterie entnommen werden können. Die Entnahme einer einzelnen Speicherzelle aus den Klemmringen ist ebenfalls möglich.

Als zusätzlicher Schutz ist jede Speicherzelle von Trennwänden umgeben, die eine Art Abschottung bilden. Diese Trennwände bestehen aus einem Isoliermaterial und werden zwischen die einzelnen Speicherzellen gesteckt. Dadurch wird jede Speicherzelle gegenüber den angrenzenden Speicherzellen isoliert. Kommt es zur Zerstörung einer oder mehrerer Speicherzellen, so werden die angrenzenden Speicherzellen durch die ausfliessenden Reaktanden der zerstörten Speicherzellen nicht beeinträchtigt.

Bei der erfindungsgemässen Hochtemperaturbatterie ist eine mehrmalige Montage beziehungsweise Demontage jeder einzelnen Speicherzelle problemlos möglich. Durch die Halterung jeder Speicherzelle mit mindestens zwei Klemmelementen, die vorzugsweise als Klemmringe mit Klemmösen ausgebildet sind, verbleibt zwischen den einzelnen Speicherzellen so viel Raum, dass die Kühlluft ungehindert entlang jeder Speicherzelle strömen kann. Die Halterung ist ferner so ausgebildet, dass zwischen dem oberen und unteren Ende der Speicherzellen jeweils ein Freiraum verbleibt, entlang dessen ebenfalls die Kühlluft geführt werden kann. Da die Halterung lediglich aus den Klemmringen und zwei Endplatten besteht, handelt es sich hierbei um eine leichte selbsttragende Konstruktion. Durch die Befestigung der Speicherzellen mit den Klemmelementen wird sichergestellt, dass genügend Freiraum für die Aufnahme der Wärmeausdehnung beziehungsweise Wärmespannung der Speicherzellen bei etwa 400°C zur Verfügung steht.

Die Halterung ist so ausgebildet, dass sie insbesondere oberhalb und zwischen den Ebenen der Klemmringe genügend Freiraum zwischen den Speicherzellen bietet, so dass um jede Speicherzelle Trennwände angeordnet werden können, die eine kammerartige Sicherheitsabschottung bilden. Es werden insbesondere oberhalb der ersten Klemmringebene und zwischen den beiden Klemmringebenen Trennwände zwischen den Speicherzellen angeordnet. Vorzugsweise wird jeweils eine Trennwand so angeordnet, dass sie zwischen den beiden Klemmringreihen einer jeden Ebene verläuft. Auf sie werden senkrecht dazu verlaufende Trennwände aufgesteckt. Diese werden jeweils zwischen zwei Klemmringpaaren auf die erstgenannte Trennwand aufgesteckt.

Die Erfindung wird nachfolgend anhand von Zeichnungen erläutert.

Es zeigen:

Fig. 1 eine Hochtemperaturbatterie im Vertikalschnitt,

Fig. 2 die in Fig. 1 gezeigte Hochtemperaturbatterie mit Speicherzellen.

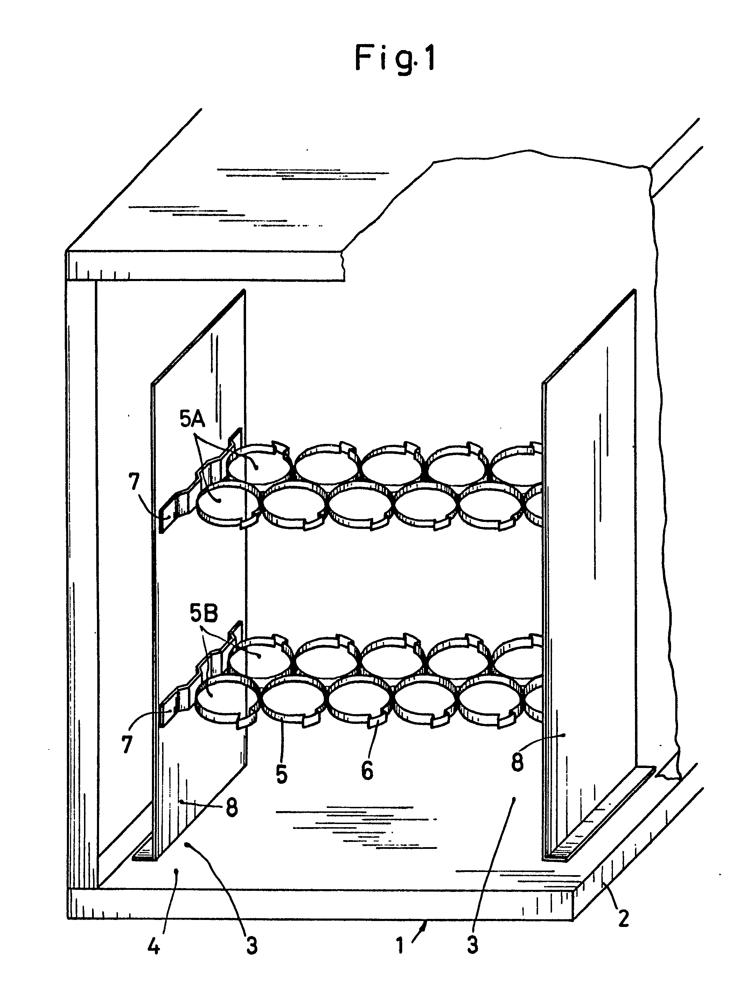

Die in Fig. 1 gezeigte Hochtemperaturbatterie 1 wird im wesentlichen durch die thermische Isolierung 2 und die Halterung 3 gebildet. Bei der thermischen Isolierung 2 handelt es sich um ein doppelwandiges Gehäuse. Der Raum zwischen der inneren und äusseren Begrenzung des Gehäuses ist evakuiert und mit einem Isoliermaterial (hier nicht dargestellt) ausgefüllt. Im Inneren des Gehäuses befindet sich ein Freiraum 4 der zur Aufnahme von Speicherzellen (hier nicht dargestellt) dient. Bei der hier gezeigten Hochtemperaturbatterie ist innerhalb der thermischen Isolierung 2 die Halterung 3 für insbesondere zylinderförmige Speicherzellen angeordnet. Die Halterung 3 ist lösbar in den Freiraum 4 eingebaut. Bei Bedarf kann sie diesem entnommen werden. Die Anzahl der Halterungen richtet sich nach der Grösse der Batterie, insbesondere nach der Anzahl der Speicherzellen. Zur Befestigung der Speicherzellen ist die Halterung 3 mit Klemmringen 5 versehen. Die Klemmringe 5 sind in zwei senkrecht untereinander angeordneten Ebenen 5A, 5B installiert. In jeder Ebene 5A, 5B sind zwei Reihen mit Klemmringen vorgesehen. Die Klemmringe 5 sind paarweise angeordnet und aufgereiht. Jeder Klemmring 5 ist mit seinen Nachbarklemmringen kraftschlüssig verbunden. Die hier gezeigten Klemmringe 5 sind aus einem Metallband hergestellt. Die Verbindung zwischen den Klemmringen erfolgt zum Beispiel durch eine Punktschweissung. Jeder Klemmring 5 ist zusätzlich mit einer Klemmöse 6 versehen, mit deren Hilfe der Innendurchmesser eines jeden Klemmringes 5 geringfügig variiert werden kann. Die Klemmringe 5 sind so angeordnet, dass ihre Klemmösen 6 nach aussen weisen. Die beiden Klemmringe 5, die sich an den Enden der beiden Klemmringreihen einer jeden Ebene 5A, 5B befinden, sind zusätzlich mit einem Stegblech 7 verbunden. Die beiden Klemmringreihen einer jeden Ebene sind horizontal angeordnet und über die Stegbleche 7 an zwei als Träger dienenden Endplatten 8 festgeschraubt. Die Endplatten 8 verlaufen senkrecht zu den Klemmringebenen 5A und 5B.

Um die Speicherzellen der Hochtemperaturbatterie 1 in die Halterung 2 einsetzen zu können, werden die Klemmösen 6 der Klemmringe 5 geöffnet. Dadurch wird der Innendurchmesser eines jeden Klemmringes 5 so weit vergrössert, dass die Speicherzelle hindurchgesteckt werden kann. Je zwei senkrecht untereinander angeordnete Klemmringe 5 sind für die Halterung einer Speicherzelle vorgesehen. Der Abstand zwischen der oberen und unteren Klemmringebene 5A, 5B ist so gewählt, dass die beiden für die Halterung einer Speicherzelle vorgesehenen Klemmringe 5 die Speicherzelle im oberen beziehungsweise unteren Bereich umfassen.

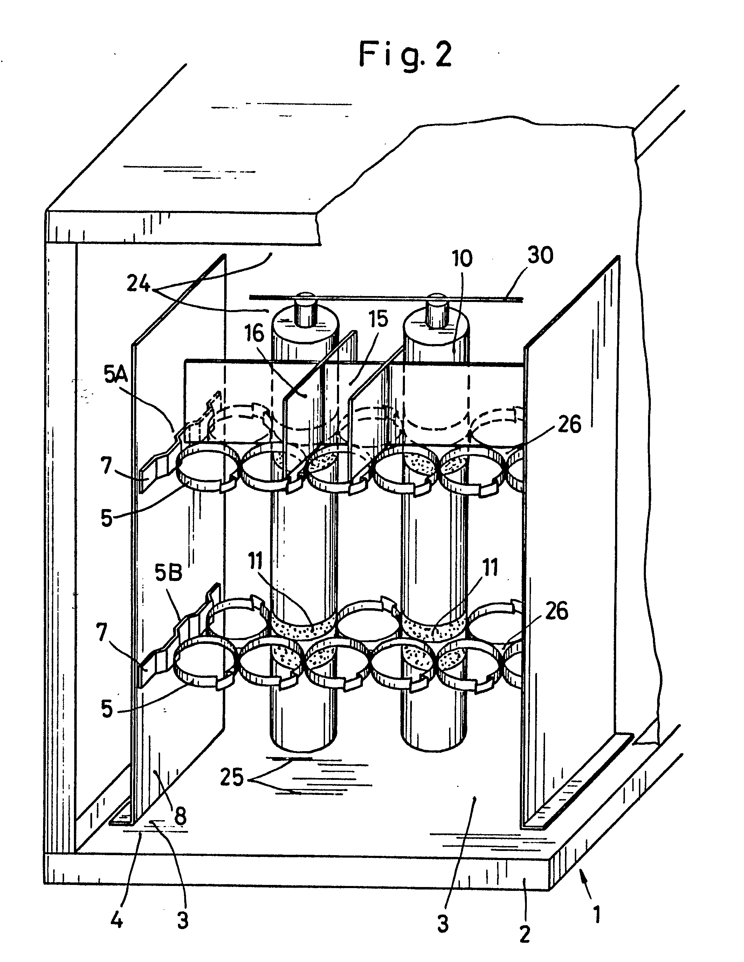

In Fig. 2 ist die in Fig. 1 gezeigte Hochtemperaturbatterie 1 nochmals dargestellt, und zwar jetzt mit den Speicherzellen 10. Wie anhand von Fig. 2 zu sehen ist, wird jede Speicherzelle, bevor sie durch die zwei Klemmringe 5 geschoben wird, mit einem Isoliermaterial 11 umgeben. Vorzugsweise wird das Isoliermaterial 11 nur in den beiden Bereichen der Speicherzelle 10 angeordnet, die von den Klemmringen 5 umgeben sind. Das Isoliermaterial 11 verhindert die elektrisch leitende Verbindung zwischen dem metallischen Gehäuse der Speicherzelle 10 und den Klemmringen 5. Nachdem die Speicherzelle durch zwei senkrecht untereinander angeordnete Klemmringe 5 gesteckt ist, werden die Klemmösen 6 dieser Klemmringe 5 wieder zusammengedrückt. Damit wird erreicht, dass die Klemmringe 5 die Speicherzelle 10 so fest umschliessen, dass sie einen festen Halt bekommt und auch bei grössten Erschütterungen nicht durch die Klemmringe 5 hindurchrutschen kann. Die beiden Klemmringebenen 5A und 5B sind so angeordnet, dass sowohl über den Speicherzellen 10 als auch unter den Speicherzellen jeweils ein Freiraum 24 beziehungsweise 25 verbleibt. Wie anhand von Fig. 1 und 2 zu sehen ist, verbleibt zwischen jeweils vier miteinander verbundenen Klemmringen 5 einer Ebene ein Freiraum 26. Da die Klemmringe 5 in der darunter- beziehungsweise darüberliegenden Ebene in gleicher Weise angeordnet sind, sind in beiden Ebenen an gleichen Stellen Freiräume 26 vorhanden. Die so gebildeten Freiräume 24, 25 und 26 ermöglichen eine optimale Kühlung einer jeden Speicherzelle 10. Für die Kühlung der Speicherzellen wird Kühlluft in das Innere der Hochtemperaturbatterie 1 eingeleitet. Diese wird vorzugsweise längs des Freiraumes 24, der sich über den Speicherzellen 10 befindet, entlanggeführt. Im Bereich der Freiräume 26 wird jeweils ein Teil der Kühlluft, die durch den Freiraum 24 strömt, nach unten abgeleitet

und längs der Speicherzellen durch die Freiräume 26 Freiräume 26 hindurch in den Freiraum 25 geleitet. Damit ist eine optimale Kühlung aller Aussenflächen einer jeden Speicherzelle möglich.

Jede Speicherzelle ist in ihrem oberen und mittleren Bereich von Trennwänden 15, 16 umgeben, die sie gegen die angrenzenden Speicherzellen isoliert. In Fig. 2 sind die Trennwände 15 und 16 nur im oberen Bereich der Speicherzellen 10 dargestellt. Zu diesem Zweck wird über jede Klemmringebene eine Trennwand 15 angeordnet. Diese ist aus einem isolierenden Material gefertigt. Diese Trennwand 15 ist zwischen den beiden Speicherzellenreihen angeordnet. Ihre Länge ist so bemessen, dass sie sich von der ersten Endplatte 8 bis zur zweiten Endplatte 8 erstreckt. Um jede Speicherzelle 10 vollständig gegen die angrenzenden Speicherzellen 10 abgrenzen zu können, sind zu dieser Trennwand 15 senkrecht verlaufende Trennwände 16 angeordnet. Die Trennwände 16 sind ebenfalls aus einem isolierenden Material hergestellt. Eine solche Trennwand 16 wird jeweils zwischen zwei Speicherzellenpaaren senkrecht zur Trennwand 15 angeordnet. Um jeder Trennwand 16 den erforderlichen Halt geben zu können, weist sie mittig einen Schlitz auf, der senkrecht zu ihrer Längsachse verläuft (hier nicht dargestellt). Die Trennwände 16 sind auf die Trennwand 15 derart aufgesetzt, dass diese in die Schlitze der Trennwände 16 eingreifen.

Bei der in den Fig. 1 und 2 gezeigten Halterung 3 sind die Klemmringe 5 einer Ebene paarweise angeordnet und aufgereiht. Es besteht die Möglichkeit, die Klemmringe einer Ebene auch so anzuordnen, dass die Klemmringe 5 der zweiten Reihe versetzt zu den Ringen der ersten Reihe angeordnet sind. Vorzugsweise besteht die Möglichkeit, die Klemmringe 5 der zweiten Reihe in die Lücke zwischen jeweils zwei Klemmringen 5 der ersten Reihe anzuordnen. Damit sitzen die Speicherzellen dichter aneinander, wodurch für ihre Halterung weniger Platz benötigt wird. Hierdurch ergibt sich die Möglichkeit innerhalb der Batterie mehr Speicherzellen anzuordnen. Die zwischen den Klemmringen 5 einer Ebene verbleibenden Freiräume 26 sind immer noch gross genug, um eine ausreichende Menge an Kühlluft an den Speicherzellen 10 entlangzuführen.

Bei dem hier gezeigten Ausführungsbeispiel sind jeweils sechs Klemmringe 5 einer Reihe zugeordnet. Jede der beiden Ebenen 5A und 5B weist zwölf Klemmringe 5 auf. Die Anzahl der Klemmringe je Ebene ist nicht auf diese Anzahl beschränkt. Vielmehr kann sie grösser oder kleiner gewählt werden. Das gleiche gilt für die Anzahl der Klemmringreihen einer Ebene. Auch diese Anzahl kann beliebig gross gewählt werden.

Falls es die Gegebenheiten erlauben, kann die Halterung 3 auch so ausgebildet werden, dass die beiden Endplatten 8 nur so hoch bemessen sind, dass sie geringfügig über die untere Klemmringebene 5B überstehen. Bei dieser Ausführungsform werden nur die Klemmringe 5 dieser Ebene über die Stegbleche 7 an den Endplatten 8 befestigt.

Die Klemmringe 5 der zweiten Ebene sind nur miteinander und mit den Speicherzellen 10 verbunden.

## Patentansprüche

1. Hochtemperaturbatterie (1) mit mindestens einer Speicherzelle (10), die von einer thermischen Isolierung (2) umgeben und mittels einer Halterung (3) im Innenraum der thermischen Isolierung befestigt ist, dadurch gekennzeichnet, dass wenigstens eine lösbare Halterung (3) vorgesehen ist, die für die freitragende Befestigung einer jeden Speicherzelle (10) wenigstens zwei in definiertem Abstand senkrecht untereinander angeordnete Klemmelemente (5) aufweist, dass jedes Klemmelement (5) mit den angrenzenden in der gleichen Ebene angeordneten Klemmelementen (5) verbunden ist, und dass die Klemmelemente (5) wenigstens einer Ebene an mindestens einem Träger (8) der Halterung (3) befestigt sind.

2. Hochtemperaturbatterie nach Anspruch 1, dadurch gekennzeichnet, dass die Klemmelemente (5) als Klemmringe ausgebildet sind.

3. Hochtemperaturbatterie nach Anspruch 2, dadurch gekennzeichnet, dass jeder Klemmring (5) mit einer Klemmöse (6) versehen ist.

4. Hochtemperaturbatterie nach Anspruch 1 bis 3, dadurch gekennzeichnet, dass in jeder Klemmelementenebene (5A, 5B) wenigstens zwei Reihen mit Klemmelementen (5) vorgesehen sind.

5. Hochtemperaturbatterie nach einem der Ansprüche 1 bis 4, dadurch gekennzeichnet, dass die Klemmelemente (5) paarweise angeordnet und aneinandergereiht sind.

6. Hochtemperaturbatterie nach Anspruch 4, dadurch gekennzeichnet, dass in jeder Klemmelementenebene (5A, 5B) die Klemmelemente (5) der ersten Reihe zu den Klemmelementen (5) der zweiten Reihe versetzt angeordnet sind.

7. Hochtemperaturbatterie nach einem der Ansprüche 3 bis 6, dadurch gekennzeichnet, dass die Klemmösen (6) der Klemmringe (5) nach aussen weisend angeordnet sind.

8. Hochtemperaturbatterie nach einem der Ansprüche 1 bis 7, dadurch gekennzeichnet, dass zwischen jedem Klemmelement (5) und jeder Speicherzelle (10) eine Isolierung (11) angeordnet ist.

9. Hochtemperaturbatterie nach einem der Ansprüche 1 bis 8, dadurch gekennzeichnet, dass die beiden Klemmelementenreihen einer Ebene (5A, 5B) an beiden Enden mit jeweils einer als Träger dienenden Endplatte (8) verbunden sind.

10. Hochtemperaturbatterie nach einem der Ansprüche 1 bis 9, dadurch gekennzeichnet, dass jede Halterung (3) zwei Träger (8) aufweist.

11. Hochtemperaturbatterie nach einem der Ansprüche 1 bis 10, dadurch gekennzeichnet, dass zwei parallel zueinander verlaufende Begrenzungswände der Isolierung (2) als Träger (8) der Halterung (3) dienen.

12. Hochtemperaturbatterie nach einem der Ansprüche 1 bis 11, dadurch gekennzeichnet, dass jede Speicherzelle (10) durch Trennwände (15, 16) gegen die angrenzenden Speicherzellen (10) isoliert ist.

## Claims

1. High-temperature battery (1) having at least one storage cell (10) surrounded by thermal insulation and fastened by means of a mounting (3) in the interior of the thermal insulation, characterised in that at least one detachable mounting (3) is provided which for the cantilever fastening of each storage cell (10) has at least two clamp elements (5) disposed vertically one below the other and a defined distance apart, that each clamp element (5) is joined to the adjoining clamp elements (5) disposed in the same plane, and that the clamp elements (5) of at least one plane are fastened to at least one carrier (8) of the mounting (3).

2. High-temperature battery according to Claim 1, characterised in that the clamp elements (5) are in the form of clamp rings.

3. High-temperature battery according to Claim 2, characterised in that each clamp ring (5) is provided with a clamping ear (6).

4. High-temperature battery according to Claims 1 to 3, characterised in that at least two rows of clamp elements (5) are provided in each clamp element plane (5A, 5B).

5. High-temperature battery according to one of Claims 1 to 4, characterised in that the clamp elements (5) are disposed in pairs and in rows.

6. High-temperature battery according to Claim 4, characterised in that in each clamp element plane (5A, 5B) the clamp elements (5) of the first row are offset relative to the clamp elements (5) of the second row.

7. High-temperature battery according to one of Claims 3 to 6, characterised in that the clamping ears (6) of the clamp rings (5) are arranged to point outwards.

8. High-temperature battery according to one of Claims 1 to 7, characterised in that insulation (11) is disposed between each clamp element (5) and each storage cell (10).

9. High-temperature battery according to one of Claims 1 to 8, characterised in that the two rows of clamp elements of a plane (5A, 5B) are joined at both ends to respective end plates (8) serving as carriers.

10. High-temperature battery according to one of Claims 1 to 9, characterised in that each mounting (3) has two carriers (8).

11. High-temperature battery according to one of Claims 1 to 10, characterised in that two boundary walls of the insulation (2), which extend parallel to one another, serve as carries (8) of the mounting (3).

12. High-temperature battery according to one of Claims 1 to 11, characterised in that each storage cell (10) is insulated by partitions (15, 16) against neighbouring storage cells (10).

**Revendications**

1. Batterie à haute température (1) comportant au moins une cellule d'accumulateur (10) qui est entourée par une isolation thermique (2) et est fixée dans l'espace interne de l'isolation thermique au moyen d'un élément de soutien (3), caractérisée par le fait qu'il est prévu au moins un élément de soutien amovible (3) présentant, pour la fixation en porte-à-faux de chaque cellule d'accumulateur (10), au moins deux éléments de serrage (5) situées au-dessous l'un de l'autre avec un espacement vertical déterminé; par le fait que chaque élément de serrage (5) est relié aux éléments de serrage adjacents (5) situés dans le même plan; et par le fait que les éléments de serrage (5) d'au moins un plan sont fixés à au moins un support (8) de l'élément de soutien (3).

2. Batterie à haute température selon la revendication 1, caractérisée par le fait que les éléments de serrage (5) sont réalisés en tant que bagues de serrage.

3. Batterie à haute température selon la revendication 2, caractérisée par le fait que chaque bague de serrage (5) est dotée d'un oeillet de serrage (6).

4. Batterie à haute température selon les revendications 1 à 3, caractérisée par le fait qu'au moins deux rangées d'éléments de serrage (5) sont prévues dans chaque plan (5A, 5B) renfermant des éléments de serrage.

5. Batterie à haute température selon l'une des revendications 1 à 4, caractérisée par le fait que les éléments de serrage (5) sont agencés par paires et sont mutuellement alignés.

6. Batterie à haute température selon la revendication 4, caractérisée par le fait que, dans chaque plan (5A, 5B) renfermant des éléments de serrage, les éléments de serrage (5) de la première rangée sont décalés par rapport aux éléments de serrage (5) de la seconde rangée.

7. Batterie à haute température selon l'une des revendications 3 à 6, caractérisée par le fait que les oeillets de serrage (6) des bagues de serrage (5) sont tournés vers l'extérieur.

8. Batterie à haute température selon l'une des revendications 1 à 7, caractérisée par le fait qu'une isolation (11) est intercalée entre chaque élément de serrage (5) et chaque cellule d'accumulateur (10).

9. Batterie à haute température selon l'une des revendications 1 à 8, caractérisée par le fait que les deux rangées d'éléments de serrage du plan (5A, 5B) sont reliées, par leurs deux extrémités, à une plaque extrême respective (8) faisant fonction de support.

10. Batterie à haute température selon l'une des revendications 1 à 9, caractérisée par le fait que chaque élément de soutien (3) présente deux supports (8).

11. Batterie à haute température selon l'une des revendications 1 à 10, caractérisée par le fait que deux parois de délimitation de l'isolation (2), s'étendant parallèlement l'une à l'autre, servent de supports (8) de l'élément de soutien (3).

12. Batterie à haute température selon l'une des revendications 1 à 11, caractérisée par le fait que chaque cellule d'accumulateur (10) est isolée, par des cloisons séparatrices (15, 16), par rapport aux cellules adjacentes d'accumulateurs (10).

# Fig.1

5A

7

5B

7

5

6

8

8

4

3

1

3

2

# Fig. 2